(19) Europäisches Patentamt
European Patent Office
Office européen des brevets

(11) EP 1 724 770 B1

(12) **EUROPEAN PATENT SPECIFICATION**

(45) Date of publication and mention
of the grant of the patent:
**15.12.2010 Bulletin 2010/50**

(51) Int Cl.:
***G11B 7/135*** (2006.01)

(21) Application number: **06113769.1**

(22) Date of filing: **10.05.2006**

(54) **Diffraction element and optical pick-up apparatus having the same**

Diffraktionselement und optische Lesekopfvorrichtung damit

Elément de diffraction et appareil de lecture optique équipé de celui-ci

(84) Designated Contracting States:
**DE GB NL**

(30) Priority: **11.05.2005 KR 200539404**

(43) Date of publication of application:
**22.11.2006 Bulletin 2006/47**

(73) Proprietor: **SAMSUNG ELECTRONICS CO., LTD.**
**Suwon-si,**
**Gyeonggi-do (KR)**

(72) Inventors:
• **Kim, Bong-gi**
**906-503 Byeokjeokgol 9danji Apartment**
**Suwon-si (KR)**
• **Park, Soo-han**
**511-901 Jinsan-maeul Samsung 5th Apt**
**Yongin-si (KR)**
• **Yoo, Jang-hoon**
**1-dong,**
**Yangcheon-gu**
**Seoul (KR)**

(74) Representative: **Waddington, Richard et al**
**Appleyard Lees,**
**15 Clare Road**
**Halifax HX1 2HY (GB)**

(56) References cited:
EP-A- 1 686 573          WO-A-03/091999
WO-A-2004/097815          US-A- 5 066 138
US-A1- 2003 016 448

**Description**

The present invention relates to an optical pick-up apparatus. More particularly, the present invention relates to a diffraction element and an optical pick-up apparatus having the same.

An optical pick-up apparatus is employed in a CDP (Compact Disc Player), a DVDP (Digital Versatile Disc Player), a CD-ROM driver, or the like to perform recording and reproducing of information of a disc, which is an optical medium, in a contactless manner. When recording information, such an optical pick-up apparatus illuminates a laser beam onto a surface of a disc to form pits. When reproducing recorded information, the optical pick-up apparatus optically reads out pit information formed on the disc and outputs the information in an electric signal. To record information on and reproduce information from a disc in this manner, the optical pick-up apparatus includes a laser diode, which is a light source for illuminating a laser beam; at least one diffraction element for splitting the beam projected from the light source into three beams; a beam splitter for controlling the deviation of the laser beam; plural lenses for forming an optical path; and plural optical devices, such as an optical detector, for detecting a signal.

Such an optical pick-up apparatus performs focusing control for controlling an objective lens in a vertical direction to align a beam spot onto a surface of a disc and tracking control for controlling the objective lens in a horizontal direction to make a beam follow a track on the disc. To perform the focusing control and the tracking control, it is necessary to produce a focus error signal (hereinafter, referred to as "FE signal") and a tracking error signal (hereinafter, referred to as "TE signal"). To produce an FE signal, an astigmatism method is usually employed. To produce a TE signal, although a push pull (hereinafter, referred to as "PP") method has been employed, a differential push pull (hereinafter, referred to as "DPP) method, in which three beams are used, has recently been employed. When the PP method is employed, a DC offset is produced in the TE signal due to objective lens shift and tilt caused as the tracking servo is performed, thereby causing an error in the TE signal.

The DPP method calculates a value of a signal by using a main beam illuminated to the center of a track and two sub-beams spaced by a predetermined distance from the main beam in radial and tangential directions, respectively, and illuminated around a groove. The DDP method has an advantage in that a DC offset produced in a TE signal by the objective lens shift and tilt can be cancelled. However, it is not possible to employ such a DPP method for discs different from each other in specification of track pitch because illumination positions of sub-beams are varied in such discs.

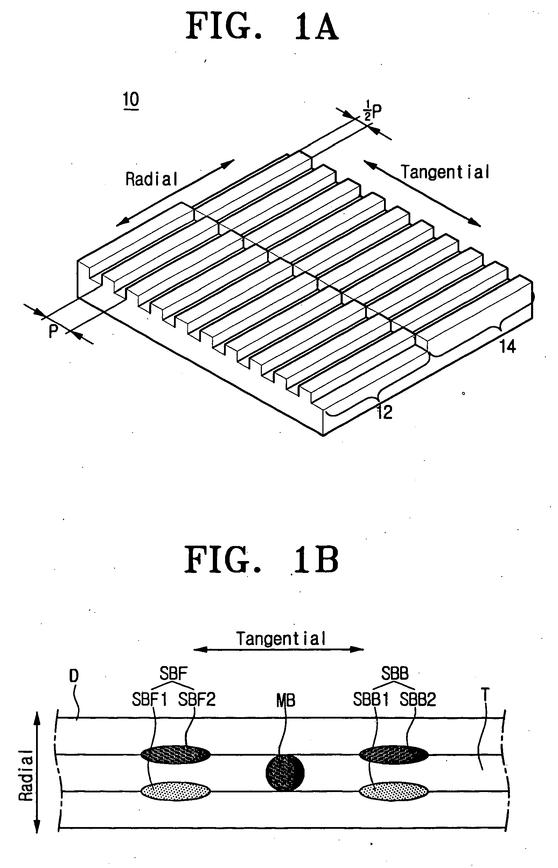

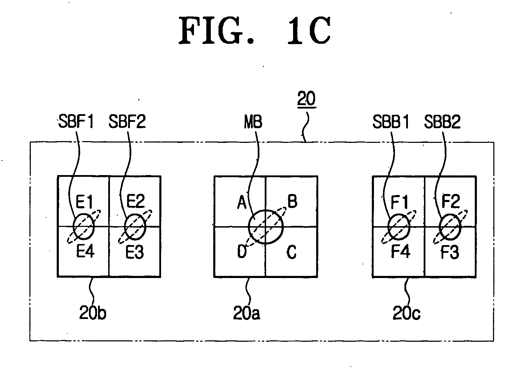

For this reason, a method illuminating three beams onto a track has been recently developed and employed, an example of which method is illustrated in FIGS. 1A to 1C. Referring to FIGS. 1A and 1B, a diffraction element 10 is divided into two regions 12 and 14, each being formed with a grid pattern in which grids are formed with a predetermined pitch P. The grid patterns respectively formed in the first and second regions are arranged to be deviated by a half pitch (1/2P) from one another to produce a phase difference in each sub-beam SBF and SBB before the sub-beams are incident onto a disc, wherein such a phase difference is produced when an existing sub-beam is illuminated onto a groove and a main beam is illuminated onto a track. A beam incident onto the diffraction element 10 configured as described above is diffracted and split into one main beam (MB), which is a zero order diffracted beam, and two sub-beams SBF and SBB, which are $\pm 1^{st}$ order diffracted beams, respectively, and of which one trails the other on a track T of a disc D. Additionally, the two sub-beams SBF and SBB are diffracted and split into two sub-beams SBF1 and SBF2, and SBB1 and SBB2, respectively, due to the separation of the first region 12 and the second region 14. The main beam MB and the sub-beams SBF and SBB diffracted by the diffraction element 10 are incident onto the disc D, and the beams incident onto the disc D are reflected and then received by an optical detector 20 as shown in FIG. 1C. Then, the optical detector 20 outputs a signal depending on the light intensity detected on each of the divided regions, whereby a TE signal and a FE signal are calculated. The FE signal is calculated through a differential astigmatism method that employs the astigmatism of a beam reflected from the disc D. According to the differential astigmatism method, the FE signal is calculated in such a manner of summing differences in signal values determined from respective diagonal regions of an optical detection element 20a for use in detecting a main beam and optical detection elements 20b and 20c, each for use in detecting a sub-beam.

However, as shown in FIG. 1C, the two sub-beams SBF1 and SBB1, and SBF2 and SBB2, which correspond to the first region 12 and the second region 14 in the diffraction element 10, respectively, are received by the optical detection elements 20b and 20c in a state in which the two sub-beams are spaced and separated by a predetermined distance from each other. In this manner, because the two sub-beams SBF1 and SBB1, and SBF2 and SBB2 are spaced and separated from each other on the optical detection elements 20b and 20c by a predetermined distance, the difference in signal values in the diagonal regions of the optical detection elements 20b and 20c, (E1 + E3) - (E2 + E4) or (F1 + F3) - (F2 + F4), is equal to that obtained before the astigmatism is produced, even if astigmatism is produced in the splitted sub-beams SBF1 and SBB1, and SBF2 and SBB2 as indicated by dotted lines. That is, there may arise a case in which a difference between a signal value produced from the E1 and E3 regions (or F1 and F3 regions) and a signal value produced from the E2 and E4 regions (or F2 and F4 regions) equals zero identically before and after the astigmatism is produced. Therefore, an error can be caused in an FE signal determined through the differential astigmatism method, whereby not only the accuracy of focusing control but also the reliability of the optical pick-up apparatus may be deteriorated due to such an error.

US 2003/016448 discloses a diffraction grating with grating regions arranged in a chevron pattern.

EP 1 686 573 discloses a diffraction grating having three grating regions arranged at angles to one another.

US 2005/180293 discloses a diffraction_ grating having complex arrangement of grating regions.

Accordingly, a need exists for an improved diffraction element for an optical pick-up apparatus that enables more accurate focusing control.

An object of the present invention is to provide a diffraction element for an optical pick-up apparatus that allows more accurate focusing control, and an optical pick-up apparatus having the same.

According to the present invention there is provided an apparatus and method as set forth in the appended claims. Preferred features of the invention will be apparent from the dependent claims, and the description which follows.

Other objects, advantages, and salient features of the invention will become apparent from the detailed description, which, taken in conjunction with the annexed drawings, discloses preferred exemplary embodiments of the invention.

For a better understanding of the invention, and to show how embodiments of the same may be carried into effect, reference will now be made, by way of example, to the accompanying diagrammatic drawings in which:

FIG. 1A is a perspective view schematically illustrating a conventional diffraction element;

FIG. 1B is a top plan view diagrammatically illustrating an optical medium in a state in which beams diffracted by the diffraction element of FIG. 1A are illuminated onto the optical medium;

FIG. 1C diagrammatically illustrates an optical detector in a state in which the beams illuminated onto the optical medium are received by the optical elements thereof after they have been reflected from the optical medium;

FIG. 2 diagrammatically illustrates an optical pick-up apparatus according to an exemplary embodiment of the present invention;

FIG. 3 is a perspective view schematically illustrating a diffraction element of FIG. 2;

FIG. 4 is a top plan view of the diffraction element of FIG. 3;

FIG. 5 is a top plan view illustrating an optical medium in a state in which beams diffracted by the diffraction element shown in FIG. 3 are illuminated onto the optical medium; and

FIG. 6 illustrates an optical detector employed in the embodiment shown in FIG. 2 in a state in which the beams illuminated onto the optical medium of FIG. 5 are received by the optical detection elements thereof after they have been reflected from the optical medium.

Throughout the drawings, like reference numerals will be understood to refer to like parts, components and structures.

Hereinbelow, exemplary embodiments of the present invention are described in detail with reference to accompanying drawings.

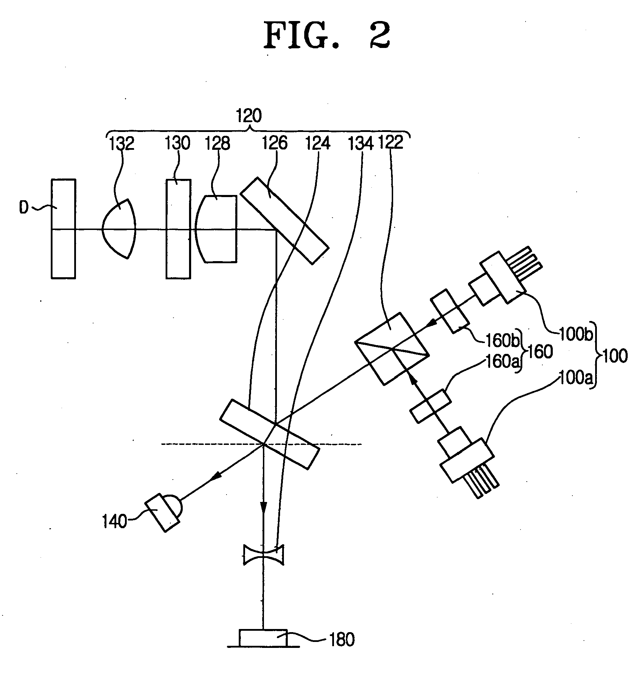

Referring to FIG. 2, an optical pick-up apparatus according to an exemplary embodiment of the present invention includes at least one light source 100, an optical system 120, a monitor optical detector 140, at least one diffraction element 160, and an optical detector 180. The monitor optical detector 140 may be implemented by an FPD (Front Photo Diode) and the optical detector 180 may be implemented by a PIDC (Photo Diode Integrated Circuit).

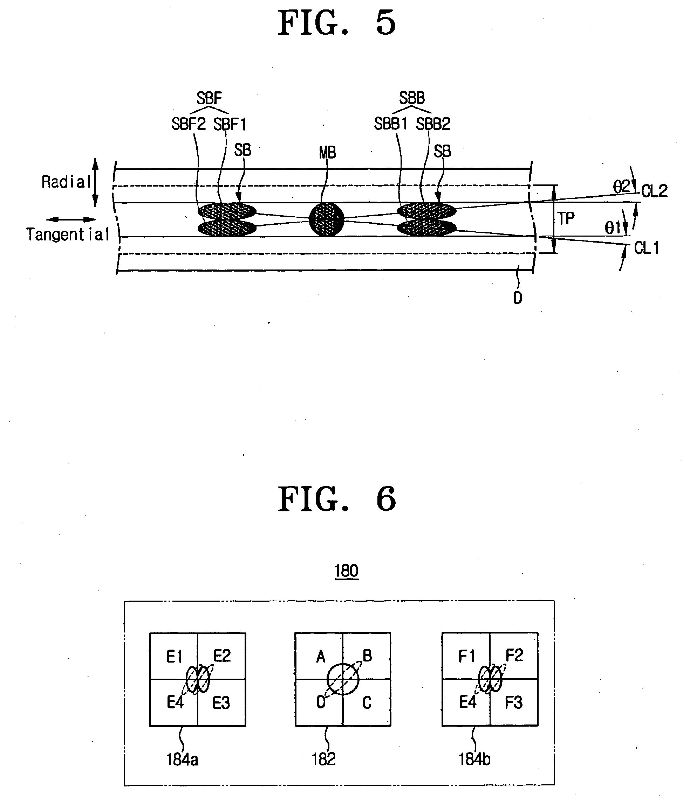

The at least one light source 100 includes a first light source 100a for a DVD and a second light source 100b for a CD. An LD (Laser Diode) with a wavelength is preferably employed in the light source 100. The first light source 100a records information on a DVD (Digital Versatile Disc) or reads information recorded on such a DVD, wherein the DVD has a track pitch (TP) (see FIG. 5) smaller than that of a CD and the first light source 100a projects a beam with a relatively short wavelength of approximately 650 nm. Additionally, the second light source 100b records information on a CD or acquires information recorded on such a CD, wherein the second light source 100b projects a beam with a wavelength of approximately 780 nm. Although the light sources for a CD and a DVD are exemplified, a light source, which projects a beam with a wavelength of approximately 405 nm for a BD (Blu-ray Disc), an HD-DVD (High Density Digital Versatile Disc) or the like, may be additionally included.

The optical system 120 includes a first beam splitter 122, a second beam splitter 124, a reflection mirror 126, a collimating lens 128, a 1/4 wavelength plate 130, an objective lens 132, and a sensor lens 134.

A cubic beam splitter 122 may be employed as the first beam splitter 122, which reflects the beam projected from the first light source 100a to change the optical path of the beam and transmits the beam projected from the second light source 100b as it is. Such selective transmission of beams may be implemented by using the fact that the beams projected from the first and second light sources 100a and 100b are different from each other in wavelength or using polarization types of the projected beams.

The second beam splitter 124 reflects a part of the beams projected from the first beam splitter 122 toward the monitor optical detector 140 and reflects the remainder toward the reflection mirror 126.

The reflection mirror 126 changes the optical path of the beam reflected from the second beam splitter 124 so that the beam may be incident onto the objective lens 132 and reflects the beam reflected from an optical medium, such as a disc, toward the second beam splitter 124.

The collimating lens 128 converts a beam projected from the reflection mirror 126 into parallel beams.

The 1/4 wavelength plate 130 converts one linearly polarized beam into one circularly polarized beam and converts the other circularly polarized beam reflected from the disc D into another linearly polarized beam. Since the specific action of such a 1/4 wavelength plate is well known in the art, detailed description thereof is omitted.

The objective lens 132 focuses a beam projected from the 1/4 wavelength plate onto the disc D.

The sensor lens 134 includes a concave lens and magnifies a spot of a beam reflected from the disc D to form a spot effective for the optical detector 180. Additionally, the sensor lens 134 may function to form astigmatism so as to detect an FE signal to be described later.

The monitor optical detector 140 receives a part of the beams projected from the first and second light sources 100a and 100b and measures the light intensities of the first and second light sources 100a and 100b. The measured light intensities are transmitted to a controller, which is not shown in the drawings, to control the voltage applied to the first and second light sources 100a and 100b, so that the light intensities of projected beams may be constantly controlled.

The at least one diffraction element 160, by which the present invention is characterized, includes a first diffraction element 160a for diffracting a beam projected from the first light source 100a and a second diffraction element 160b for diffracting a beam projected from the second light source 100b. Because the first and second diffraction elements 160a and 160b are substantially the same in function and configuration, the description of diffraction element 160 refers to both diffraction elements 160a and 160b.

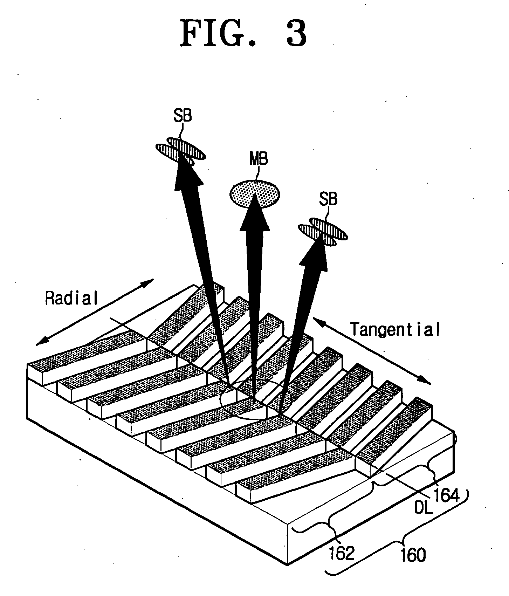

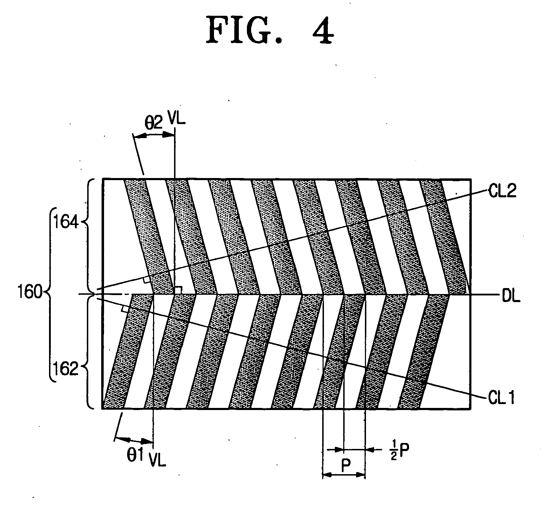

Referring to FIGS. 3 and 4, each diffraction element 160a and 160b is divided into a first region 162 and a second region 164 about a division line DL. The division line DL is substantially parallel to the tangential direction, that is, the track direction of the disc D. The first region 162 and the second region 164 are tilted or angled by predetermined angles θ1 and θ2, respectively, with respect to a virtual line VL that is substantially perpendicular to the division line DL. The grid patterns respectively formed on the first and second regions 162 and 164 are deviated from one another by a half pitch (1/2P).

Referring to FIG. 5, the diffraction element 160 configured as described above splits a beam projected from the optical source 100 into a main beam MB, which is a zero order diffracted beam, and two sub-beams SBF and SBB, which are ±1st order diffracted beams. Additionally, the leading sub-beam SBF and the trailing beam SBB are respectively split into sub-beams SBF1 and SBB1, which correspond to the grid pattern of the first region 162, and sub-beams SBF2 and SBB2, which correspond to the grid pattern of the second region 164. At this time, the sub-beams SBF1 and SBB1 and the sub-beams SBF2 and SBB2, which respectively correspond to the first region 162 and the second region 164, are positioned on lines CL1 and CL2, which are substantially parallel to the lines substantially perpendicular to the grid patterns of the first and second regions 162 and 164, respectively. That is, the angle θ1 between the line CL1 interconnecting the sub-beams SBF1 and SBB1 corresponding to the first region 162 and a virtual line substantially parallel to the track T is equal to the line θ1 between the grid pattern of the first region 162 and the virtual line VL substantially perpendicular to the division line DL. Therefore, the two sub-beams SBF1 and SBB1 corresponding to the first region 162 are illuminated on the track T in the state of being tilted by the tilting angle θ1 of the grid pattern of the first region 162. This principle is substantially identically applied to the sub-beams SBF2 and SBB2 corresponding to the second region 164. Therefore, the angle θ2 between the line CL2 interconnecting the sub-beams SBF2 and SBB2 corresponding to the second region 164 and a virtual line substantially parallel to the track T is equal to the angle θ2 between the grid pattern of the first region 164 and the virtual line VL substantially perpendicular to the division line DL.

Accordingly, by adjusting the tilting of the patterns of the first region 162 and the second region 164 to adjust the positions of the sub-beams SBF1 and SBF2, and SBF2 and SBB2, it is possible for the two leading sub-beams SBF1 and SBF2 and the two trailing sub-beams SBB1 and SBB2 to be closely illuminated on the track T. More preferably, the two leading sub-beams SBF1 and SBF2 and the two trailing sub-beams SBB1 and SBB2 come into contact with each other. Preferably, the grid patterns of the first region 162 and the second region 164 are tilted in such a way that they form a V-shaped arrangement and respectively form angles θ1 and θ2 with respect to the virtual line VL that is substantially perpendicular to the division line DL. However, it is necessary to set the tilting angles of the grid patterns of the respective regions 162 and 164 to be different from each other due to various parts tolerance and assembly tolerance thereof.

By adjusting the tilting angles θ1 and θ2 of the grid patterns of the regions 162 and 164, the two leading sub-beams SBF1 and SBF2 and the two trailing sub-beams SBF2 and SBB2 may be illuminated to the disc in a state of being more closely arranged to one another, and, more preferably, in contact with each other.

Meanwhile, the grid patterns of the respective regions 162 and 164 are arranged to be deviated a half pitch (1/2P) from one another, so that a phase difference of 180 degrees is produced between the sub-beams SBF1 and SBB1 corresponding to the first region 162 and the sub-beams SBF2 and SBB2 corresponding to the second region 164. This allows a TE signal to be calculated with the DPP method even if a main beam MB and a sub-beam are illuminated on a track T, by previously forming a phase difference of each of the sub-beams SBF1 and SBF2, and SBB1 and SBB2 before they are incident onto the disc. However, it is possible to use various methods, such as forming a phase difference by changing the thicknesses of the respective regions 162 and 164, unlike the present exemplary embodiment.

Referring to FIG. 6, the optical detector 180 is a device for converting a beam reflected from the disc D into an electrical signal and detects an information signal (RF signal), an FE signal, and a TE signal. The optical detector 180 preferably includes three optical detection elements 182, 184a, and 184b. A main beam (MB, see FIG. 5) reflected from the disc D is illuminated onto the three optical detection elements 182, 184a and 184b of the optical detector 180 through the objective lens 132, the 1/4 wavelength plate 130, the collimating lens 128, the second beam splitter 124 and the sensor lens 134 (see FIG.2).

The centrally arranged optical element 182 of the optical detector 180, which is an optical detection element for use in detecting a main beam, is divided into four regions, that is, A, B, C and D regions. Additionally, the optical detection elements 184a and 184b, each for use in detecting a sub-beam, are located at both sides of the optical element 182 for use in detecting a main beam and are divided into E1, E2, E3 and E4 regions, and F1, F2, F3 and F4 regions, respectively. The divided regions individually receive a main beam (MB) and a sub-beam (SB) (see FIG. 5), and independently output electrical signals depending on light intensity.

Additionally, the FE signal is obtained from the optical detector 180 through a differential astigmatism method, and the TE signal is obtained through a DPP method. If the electrical signals detected from the divided regions are a, b, c, and d, e1, e2, e3, and e4, and f1, f2, f3, and f4, respectively, the information signal (RF), the FE signal and the TE signal may be respectively calculated by Equations 1 to 3, as follows.

$$\text{Equation 1:}$$
$$RF = a + b + c + d$$

$$\text{Equation 2:}$$
$$FE = [(a + c) - (b + d)] + k[(e1 + e3) - (e2 + e4) + (f1 + f3) - (f2 + f4)]$$

where $k = (a + b + c + d) / (e1 + e2 + e3 + e4 + f1 + f2 + f3 + f4)$

$$\text{Equation 3:}$$
$$TE = (a + d) - (b + c) - k[(e1 + e4) - (e2 + e4) - (f1 + f4) - (f2 + f3)]$$

where $k = (a + b + c + d) / (e1 + e2 + e3 + e4 + f1 + f2 + f3 + f4)$

In Equations 2 and 3, k is a gain for compensation applied because a sub-beam (SB), which is a $\pm$1st order refraction beam, is lower in light intensity than a main beam (MB), which is a zero order refraction beam.

Here, the FE signal obtained through the differential astigmatism method is calculated by a difference in signal values obtained in the diagonally located regions in each of the optical detection elements 182, 184a and 184b. Because the sub-beams SBF1 and SBF2, and SBB1 and SBB2 are separated from each other in the prior art, there may arise a case in which the value of (e1 + e3) - (e2 + e4) or (f1 + f3) - (f2 + f4) is not changed even if astigmatism is produced in the sub-beams SBF1 and SBF2, and SBB1 and SBB2. However, it may be appreciated that because the sub-beams SBF1 and SBF2, and SBB1 and SBB2 received by the optical detection elements 184a and 184b for sub-beams are in contact with each other according to the present exemplary embodiment, the value of (e1 + e3) - (e2 + e4) or (f1 + f3) - (f2 + f4) is changed if astigmatism is produced in the sub-beams SBF1 and SBF2, and SBB1 and SBB2 as indicated by dotted lines in FIG. 6. Accordingly, focusing control may be more accurately performed, because the FE signal may be more accurately detected by the differential astigmatism method.

As described above, according to the present invention, because sub-beams are allowed to be received in a state of being more closely arranged or in contact with each other by optical detection elements by dividing a diffraction element into two regions and adjusting the tilting of the grid pattern of each of the two regions of the diffraction element, the accuracy of an FE signal calculated through a differential astigmatism method may be improved, thereby allowing more accurate focusing control.

By improving the accuracy of focusing control, it is possible to improve the reliability of an optical pick-up apparatus.

Although a few preferred embodiments have been shown and described, it will be appreciated by those skilled in the art that various changes and modifications might be made within the scope of the invention, as defined in the appended claims.

**Claims**

1. A diffraction element (160) for an optical pick-up apparatus, which element is divided into first and second regions (162,164) arranged adjacent to each other and each formed with a grid pattern in which grids are repeated with the same predetermined pitch P, wherein a grid pattern in the first and second regions (162,164) is tilted by a predetermined angle with respect to a virtual line VL perpendicular to a division line DL which divides the first and second regions (162, 164) ;
   **characterised in that** the grid pattern of the first region (162) and the grid pattern of the second region (164) are deviated by a half pitch from each other.

2. The diffraction element (160) as claimed in claim 1, wherein the division line is parallel to a tangential line of an optical medium (D), and each of the grid patterns is tilted with respect to the virtual line VL.

3. The diffraction element (160) as claimed in claim 2, wherein the grid pattern of the first region (162) and the grid pattern of the second region (164) are formed to be deviated from each other.

4. The diffraction element (160) as claimed in any preceding claim, wherein a sub-beam (SBF1 or SBB1) corresponding to the first region (162) and a sub-beam (SBF2 or SBB2) corresponding to the second region (164) are in contact with each other when the sub-beams are illuminated onto an optical medium.

5. An optical pick-up apparatus comprising:

   at least one light source (100);
   at least one diffraction element (160) for splitting a beam projected from the light source (100) into three beams, the diffraction element (160) being divided into first and second regions (162,164) adjacent to each other and each formed with a grid pattern in which grids are repeated with the same predetermined pitch P;
   an optical system (120) for illuminating the beams split by the diffraction element (160) onto an optical medium and guiding the beams reflected from the optical medium; and
   an optical detector (140) for receiving a beam reflected from the optical medium and guided by the optical system (120) to detect an information signal, a focus error(FE) signal and a tracking error(TE) signal,
   wherein a grid pattern in the first and second regions (162,164) is tilted by a predetermined angle with respect to a virtual line (VL) perpendicular to a division line (DL) which divides the first and second regions (162,164)
   **characterised in that** the grid pattern of the first region (162) and the grid pattern of the second region (164) are formed to be deviated by a half pitch from each other.

6. The optical pick-up apparatus as claimed in claim 5, wherein the division line is parallel to a tangential line of an optical medium, and each of the grid patterns is tilted with respect to the virtual line VL.

7. The optical pick-up apparatus as claimed in claim 5 or claim 6, wherein the at least one light source (100) comprises first and second light sources (100a,100b) each for use in different optical mediums, and the at least one diffraction element (160) comprises first and second diffraction elements (160a,160b) for diffracting beams projected from the first and second light sources (100a,100b), respectively.

8. The optical pick-up apparatus as claimed in claim 7, wherein the optical system (120) comprises:

a first beam splitter for changing the path of the beam projected from the first light source and transmitting the beam projected from the second light source;

a second beam splitter for changing the path of the beam projected from the first beam splitter and guiding the beam reflected from the optical medium to the optical detector (140);

a collimating lens for changing the beams projected from the second beam splitter into parallel beams; and an objective lens for focusing the beams projected from the collimating lens to the optical medium.

**Patentansprüche**

1. Beugungselement (160) für eine optische Aufnahmevorrichtung, das in einen ersten und zweiten Bereich (162, 164) unterteilt ist, die nebeneinander angeordnet sind und jeweils mit einem Gittermuster ausgebildet sind, in dem Gitter mit dem gleichen vorbestimmten Rastermaß P wiederholt sind, wobei ein Gittermuster in dem ersten und zweiten Bereich (162, 164) um einen vorbestimmten Winkel bezüglich einer virtuellen Linie VL senkrecht zu einer Teilungslinie DL, die den ersten und zweiten Bereich (162, 164) unterteilt, gekippt ist;
   **dadurch gekennzeichnet, dass** das Gittermuster des ersten Bereichs (162) und das Gittermuster des zweiten Bereichs (164) um ein halbes Rastermaß voneinander abweichen.

2. Beugungselement (160) nach Anspruch 1, wobei die Teilungslinie parallel zu einer Tangentiallinie eines optischen Mediums (D) verläuft, und jedes der Gittermuster bezüglich der virtuellen Linie VL gekippt ist.

3. Beugungselement (160) nach Anspruch 2, wobei das Gittermuster des ersten Bereichs (162) und das Gittermuster des zweiten Bereichs (164) so ausgebildet sind, dass sie voneinander abweichen.

4. Beugungselement (160) nach einem der vorhergehenden Ansprüche, wobei ein dem ersten Bereich (162) entsprechender Teilstrahl (SBF1 oder SBB1) und ein dem zweiten Bereich (164) entsprechender Teilstrahl (SBF2 oder SBB2) miteinander in Kontakt stehen, wenn die Teilstrahlen auf ein optisches Medium gestrahlt werden.

5. Optische Aufnahmevorrichtung, umfassend:

   mindestens eine Lichtquelle (100);
   mindestens ein Beugungselement (160) zum Teilen eines von der Lichtquelle (100) projizierten Strahls in drei Strahlen, wobei das Beugungselement (160) in einen ersten und zweiten Bereich (162, 164) unterteilt werden, die nebeneinander liegen und jeweils mit einem Gittermuster ausgebildet sind, in dem Gitter mit dem gleichen vorbestimmten Rastermaß P wiederholt werden;
   ein optisches System (120) zum Strahlen der von dem Beugungselement (160) geteilten Strahlen auf ein optisches Medium und Leiten der von dem optischen Medium reflektierten Strahlen; und
   einen optischen Detektor (140) zum Empfangen eines von dem optischen Medium reflektierten und von dem optischen System (120) geleiteten Strahls zum Erfassen eines Informationssignals, eines Fokussierungsfehlersignals (FE-Signals) und eines Gleichlauffehlersignals (TE-Signals),
   wobei ein Gittermuster in dem ersten und zweiten Bereich (162, 164) um einen vorbestimmten Winkel bezüglich einer virtuellen Linie (VL) senkrecht zu einer Teilungslinie (DL), die den ersten und zweiten Bereich (162, 164) unterteilt, gekippt ist;
   **dadurch gekennzeichnet, dass** das Gittermuster des ersten Bereichs (162) und das Gittermuster des zweiten Bereichs (164) derart ausgebildet sind, dass sie um ein halbes Rastermaß voneinander abweichen.

6. Optische Aufnahmevorrichtung nach Anspruch 5, wobei die Teilungslinie parallel zu einer Tangentiallinie eines optischen Mediums verläuft, und jedes der Gittermuster bezüglich der virtuellen Linie VL gekippt ist.

7. Optische Aufnahmevorrichtung nach Anspruch 5 oder Anspruch 6, wobei die mindestens eine Lichtquelle (100) eine erste und zweite Lichtquelle (100a, 100b), jeweils zur Verwendung in verschiedenen optischen Medien, umfasst und das mindestens eine Beugungselement (160) ein erstes und zweites Beugungselement (160a, 160b) zum Beugen von von der ersten bzw. zweiten Lichtquelle (100a, 100b) projizierten Strahlen umfasst.

8. Optische Aufnahmevorrichtung nach Anspruch 7, wobei das optische System (120) Folgendes umfasst:

   einen ersten Strahlteiler zum Ändern des Wegs des von der ersten Lichtquelle projizierten Strahls und Übertragen des von der zweiten Lichtquelle projizierten Strahls;

einen zweiten Strahlteiler zum Ändern des Wegs des von dem ersten Strahlteiler projizierten Strahls und Leiten des von dem optischen Medium reflektierten Strahls zu dem optischen Detektor (140);
eine Kollimationslinse zum Ändern der von dem zweiten Strahlteiler projizierten Strahlen in parallele Strahlen; und
eine Objektivlinse zum Fokussieren der von der Kollimationslinse projizierten Strahlen auf das optische Medium.

## Revendications

1. Élément de diffraction (160) destiné à un appareil de lecture optique, lequel élément est divisé en des première et seconde régions (162, 164) agencées de façon adjacente l'une à l'autre et sur chacune desquelles est formé un motif de grilles, dans lequel des grilles sont répétées selon le même pas prédéterminé P, dans lequel un motif de grilles dans les première et seconde régions (162, 164) est incliné d'un angle prédéterminé par rapport à une ligne virtuelle VL perpendiculaire à une ligne de division DL qui divise les première et seconde régions (162, 164) ; **caractérisé en ce que** le motif de grilles de la première région (162) et le motif de grilles de la seconde région (164) sont écartés l'un de l'autre d'un demi-pas.

2. Élément de diffraction (160) selon la revendication 1, dans lequel la ligne de division est parallèle à une ligne tangente à un support optique (D), et dans lequel chacun des motifs de grilles est incliné par rapport à la ligne virtuelle VL.

3. Élément de diffraction (160) selon la revendication 2, dans lequel le motif de grilles de la première région (162) et le motif de grilles de la seconde région (164) sont formés de façon à s'écarter l'un de l'autre.

4. Élément de diffraction (160) selon l'une quelconque des revendications précédentes, dans lequel un sous-faisceau (SBF1 ou SBB1) correspondant à la première région (162) et un sous-faisceau (SBF2 ou SBB2) correspondant à la seconde région (164) sont en contact l'un avec l'autre lorsque les sous-faisceaux sont projetés sur un support optique.

5. Appareil de lecture optique comprenant :

   au moins une première source de lumière (100) ;
   au moins un élément de diffraction (160) destiné à séparer le faisceau projeté en provenance de la source de lumière (100) en trois faisceaux, l'élément de diffraction (160) étant divisé en des première et
   seconde régions (162, 164) adjacentes l'une à l'autre et sur chacune desquelles est formé un motif de grilles, dans lequel des grilles sont répétées selon le même pas prédéterminé P ;
   un système optique (120) destiné à projeter les faisceaux séparés par l'élément de diffraction (160) sur un support optique et à guider les faisceaux réfléchis par le support optique ; et
   un détecteur optique (140) destiné à recevoir un faisceau réfléchi par le support optique et guidé par le système optique (120) afin de détecter un signal d'information, un signal d'erreur de focalisation (FE) et un signal d'erreur de poursuite (TE),
   dans lequel un motif de grilles dans les première et seconde régions (162, 164) est incliné d'un angle prédéterminé par rapport à une ligne virtuelle (VL) perpendiculaire à une ligne de division (DL) qui divise les première et seconde régions (162, 164) ;
   **caractérisé en ce que** le motif de grilles de la première région (162) et le motif de grilles de la seconde région (164) sont formés de façon à s'écarter l'un de l'autre d'un demi-pas.

6. Appareil de lecture optique selon la revendication 5, dans lequel dans lequel la ligne de division est parallèle à une ligne tangente à un support optique, et dans lequel chacun des motifs de grilles est incliné par rapport à la ligne virtuelle VL.

7. Appareil de lecture optique selon la revendication 5 ou la revendication 6, dans lequel ladite au moins une source de lumière (100) comprend des première et seconde sources de lumière (100a, 100b), chacune destinée à être utilisée dans différents supports optiques, et dans lequel ledit au moins un élément de diffraction (160) comprend des premier et second éléments de diffraction (160a, 160b) destinés à diffracter des faisceaux respectivement projetés par les première et seconde sources de lumière (100a, 100b).

8. Appareil de lecture optique selon la revendication 7, dans lequel le système optique (120) comprend :

une première séparatrice de faisceaux destinée à modifier le trajet du faisceau projeté par la première source de lumière et à transmettre le faisceau projeté par la seconde source de lumière ;

une seconde séparatrice de faisceaux destinée à modifier le trajet du faisceau projeté par la première source de lumière et à guider le faisceau réfléchi par le support optique vers le détecteur (140) ;

une lentille de collimation destinée à transformer les faisceaux projetés par la seconde séparatrice de faisceaux en des faisceaux parallèles ; et

un objectif destiné à focaliser les faisceaux projetés par la lentille de focalisation vers le support optique.

# FIG. 1A

# FIG. 1B

# FIG. 1C

# FIG. 2

# FIG. 3

# FIG. 4

# FIG. 5

# FIG. 6

<u>180</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003016448 A
- EP 1686573 A
- US 2005180293 A